# FASCICULE DE BREVET EUROPEEN

(11) **EP 1 410 477 B1**
(45) Date de publication et mention de la délivrance du brevet: **19.10.2005**
(21) Numéro de dépôt: 00975718.8
(22) Date de dépôt: 14.11.2000
(51) Int. Cl.: H02G 7/00, H02J 3/00

(54) **APPAREIL ET METHODE DE COMMUTATION POUR VARIER L'IMPEDANCE D'UNE LIGNE DE PHASE D'UN TRONCON D'UNE LIGNE DE TRANSPORT D'ENERGIE ELECTRIQUE**
VORRICHTUNG UND VERFAHREN ZUR KOMMUTATION, UM DIE IMPEDANZ EINES PHASENLEITERS EINER HOCHSPANNUNGSLEITUNG ZU ÄNDERN
SWITCHING APPARATUS AND METHOD FOR VARYING A PHASE LINE IMPEDANCE OF AN ELECTRIC POWER TRANSPORT LINE SECTION

(43) Date de publication de la demande: 21.04.2004
(73) Titulaire: HYDRO-QUEBEC, Montréal Québec H2Z 1A4 (CA)
(72) Inventeur: COUTURE, Pierre, Boucherville, Québec J4B 4A4 (CA)
(74) Mandataire: Thébault, Jean-Louis
(86) Numéro de dépôt international: PCT/CA2000/001348
(87) Numéro de publication internationale: WO 2002/041459

(56) Documents cités:
- EP-A- 0 439 953
- WO-A-00/35061
- US-A- 6 018 152

## Description

La présente invention vise un appareil et une méthode de commutation pour varier l'impédance d'une ligne de phase d'un tronçon d'une ligne de transport d'énergie électrique. Dans le présent texte, nous appellerons "ligne de phase" ce qui est communément appelé par l'homme de l'art "phase". L'appareil et la méthode peuvent servir entre autres mais non exclusivement à dégivrer une ligne de transport d'énergie électrique, à modifier l'écoulement de puissance à travers une ligne de transport d'énergie électrique de façon statique ou dynamique, stabiliser un réseau de lignes de transport d'énergie électrique, filtrer des harmoniques d'une ligne de transport d'énergie électrique, à amortir ou dissiper de l'énergie transportée par une ligne de transport d'énergie électrique, ou bien même limiter le courant d'une ligne de transport d'énergie électrique.

Connu dans l'art antérieur, il existe le brevet américain no 2,797,344 délivré le 25 juin 1957, et nommant comme inventeur monsieur W. T. Peirce. Ce brevet décrit un appareil pour déglacer des câbles électriques. Ce brevet propose que dans une ligne de transmission de puissance électrique, un câble soit réalisé par une paire de conducteurs isolés les uns des autres. Un pont électrique est prévu en série avec un desdits conducteurs. Un moyen est prévu pour ouvrir le pont électrique, et un autre moyen est prévu pour commander l'opération du pont électrique en réponse à une accumulation de glace sur le câble. Le pont électrique comprend un interrupteur normalement fermé qui est ouvert par le moyen qui répond à une accumulation de glace sur le câble.

Connu dans l'art antérieur, il existe également le brevet américain no 4,082,962 délivré le 4 avril 1978, et nommant comme inventeurs Vladimir Vladimirovich BURGSDORF et coll. Ce brevet décrit un dispositif pour faire fondre la glace en utilisant un courant continu dans les conducteurs d'une ligne de transmission de puissance suspendue. Ce brevet propose d'utiliser un redresseur que l'on branche momentanément à l'extrémité d'un des conducteurs de la ligne. L'appareil comprend également un circuit de mise à la terre ainsi qu'un circuit de filtrage branchés en parallèle au redresseur. Le circuit proposé dans ce brevet utilise un courant redressé pour déglacer la ligne. Pour chaque section de ligne, un redresseur, un circuit de mise à la terre ainsi qu'un circuit de filtrage sont utilisés.

Connu dans l'art antérieur, il existe également le brevet américain no 4,126,792 délivré le 21 novembre 1978, et nommant comme inventeurs Georgy A. GENRIKH et coll. Ce brevet propose un réseau à haut voltage pour des régions où le givre est présent en grande quantité. Ce brevet propose l'utilisation d'un redresseur et d'un circuit de commutation qui permettent de brancher au moins un conducteur de la ligne au redresseur afin de faire fondre le givre par un courant redressé.

Connu dans l'art, il existe également le brevet américain no 4,119,866 délivré le 10 octobre 1978, et nommant comme inventeurs Georgy Andreevich GENRIKH et coll. Ce brevet propose l'utilisation d'une source de courant continu et de différents commutateurs branchés sur une section de ligne pour permettre de déglacer un conducteur de la ligne par courant continu.

Connu dans l'art antérieur, il existe également le brevet américain no 4,190,137 délivré le 26 février 1980, et nommant comme inventeurs Akira SHIMADA et coll. Ce brevet décrit un appareil pour déglacer des câbles de tramway. Ce brevet propose de former des boucles avec différentes sections des câbles d'alimentation du tramway et d'utiliser un certain type de transformateurs pour faire passer dans les boucles en question un courant que l'on superpose au courant d'alimentation pour ainsi déglacer les câbles d'alimentation.

Également connu dans l'art antérieur, il existe les brevets américains suivants qui décrivent différents appareils et méthodes de commutation de lignes pour différentes applications: 2,240,772; 2,852,075; 4,028,614; 4,085,338; 4,135,221; 4,322,632; 4,489,270; 4,492,880; 4,769,587; 5,224,882; 5,483,030; 5,734,256; 5,777,837; et 5,754,045.

Le document WO-A-0035061 décrit également un appareil et une méthode de commutation, pour un tronçon d'une ligne de transport d'énergie électrique du type mentionné ci-dessus.

Ainsi, un des inconvénients que l'on retrouve dans l'ensemble des appareils et méthodes de commutation mentionnés ci-dessus, réside dans le fait que les stratégies offertes à l'utilisateur pour faire varier l'impédance d'un tronçon d'une ligne de transport d'énergie électrique comportant plusieurs lignes de phase sont limitées.

Un des objectifs de la présente invention est de proposer un appareil et une méthode de commutation pour varier l'impédance d'un tronçon d'une ligne de transport d'énergie électrique avec des lignes de phase à conducteurs multiples selon une plage de possibilités beaucoup plus grande que ce qui est possible dans l'art antérieur, d'une façon efficace et sécuritaire.

Les objets, avantages et autres caractéristiques de la présente invention deviendront plus apparents à la lecture de la description suivante qui ne se veut pas restrictive, des différents modes de réalisation préférés donnés à titre d'exemple seulement avec référence aux dessins ci-joints.

### Résumé de l'invention:

La présente invention vise un appareil de commutation pour varier l'impédance d'une ligne de phase d'un tronçon d'une ligne de transport d'énergie électrique, la ligne de phase comportant n conducteurs isolés électriquement les uns des autres et court-circuités entre eux à deux extrémités du tronçon, l'appareil comprenant:
pour chacun d'au moins un des n conducteurs, une composante passive et une paire d'interrupteurs électromécanique et électronique branchés en parallèle l'un à l'autre, la paire d'interrupteurs étant apte à connecter et déconnecter de façon sélective la composante passive en série avec le conducteur correspondant en réponse à des signaux de commande, les interrupteurs de chaque paire étant commandables de façon indépendante;
des moyens de détection pour détecter des conditions d'opération courantes de la ligne de phase; et
des moyens de commande pour commander chaque paire d'interrupteurs en fonction des conditions d'opération courantes détectés par les moyens de détection.

La présente invention vise aussi un appareil de commutation pour varier l'impédance d'une ligne de phase d'un tronçon d'une ligne de transport d'énergie électrique, la ligne de phase comportant n conducteurs isolés électriquement les uns des autres et court-circuités entre eux à deux extrémités du tronçon, l'appareil comprenant:
pour chacun d'au plus n-1 des n conducteurs, un interrupteur électronique apte à ouvrir ou fermer de façon sélective le conducteur correspondant en réponse à des signaux de commande;
des moyens de détection pour détecter des conditions d'opération courantes de la ligne de phase; et
des moyens de commande pour commander l'interrupteur électronique en fonction des conditions d'opération courantes détectées par les moyens de détection.

La présente invention vise aussi une méthode de commutation pour varier l'impédance d'une ligne de phase d'un tronçon d'une ligne de transport d'énergie électrique, la ligne de phase comportant n conducteurs isolés électriquement les uns des autres et court-circuités entre eux à deux extrémités du tronçon, la méthode comprenant les étapes suivantes:
(a) détecter des conditions d'opération courantes de la ligne de phase; et
(b) commander des paires d'interrupteurs électromécanique et électronique branchés en parallèle l'un à l'autre en fonction des conditions d'opération courantes détectées à l'étape (a) pour connecter et déconnecter de façon sélective au moins une composante passive branchée respectivement en série avec au moins un des n conducteurs en réponse à des signaux de commande, les interrupteurs de chaque paire étant commandables de façon indépendante.

La présente invention vise aussi une méthode de commutation pour varier l'impédance d'une ligne de phase d'un tronçon d'une ligne de transport d'énergie électrique, la ligne de phase comportant n conducteurs isolés électriquement les uns des autres et court-circuités entre eux à deux extrémités du tronçon, la méthode comprenant les étapes suivantes:
(a) détecter des conditions d'opération courantes de la ligne de phase; et
(b) commander des interrupteurs électroniques en fonction des conditions d'opération courantes détectés à l'étape (a) pour ouvrir ou fermer de façon sélective au plus n-1 des n conducteurs en réponse à des signaux de commande.

### Brève description des dessins:

La figure 1 est un diagramme de circuit schématique montrant une ligne de phase munie d'un interrupteur selon un mode de réalisation préféré de la présente invention.
La figure 2 est un diagramme de circuit schématique montrant une ligne de phase munie d'interrupteurs selon un mode de réalisation préféré de la présente invention.
La figure 3 est un diagramme de circuit schématique montrant un tronçon de ligne triphasée muni d'interrupteurs selon un mode de réalisation préféré de la présente invention.
La figure 4 est un diagramme de circuit montrant un mode de réalisation préféré d'un élément montré aux figures 1, 2 ou 3, selon la présente invention.
La figure 5 est un schéma bloc d'un appareil selon un mode de réalisation préféré de la présente invention, en relation avec la figure 3.
La figure 6 est un diagramme de circuit schématique montrant un tronçon d'une ligne triphasée muni d'interrupteurs selon un mode de réalisation préféré de la présente invention.
La figure 7 est un schéma bloc d'un appareil selon un mode de réalisation préféré de la présente invention, en relation avec la figure 6.
La figure 8 est une vue de côté partielle et schématique d'un mode de réalisation préféré d'un élément montré dans la figure 7, dans une première position, selon la présente invention.
La figure 9 est une vue de côté partielle et schématique de l'élément montré à la figure 8 dans une seconde position d'opération, selon la présente invention.
La figure 10 est un diagramme de circuit schématique montrant un tronçon d'une ligne triphasée muni d'interrupteurs selon un mode de réalisation préféré de la présente invention.
La figure 11 est un diagramme de circuit schématique montrant un tronçon de ligne triphasée muni d'interrupteurs selon le mode de réalisation préféré de la présente invention.
La figure 12 est un diagramme de circuit schématique montrant un tronçon de ligne triphasée muni d'interrupteurs selon un mode de réalisation préféré de la présente invention.
La figure 13 est un diagramme de circuit schématique montrant un tronçon de ligne triphasée muni d'interrupteurs selon un mode de réalisation préféré de la présente invention.
La figure 14 est un diagramme de circuit schématique montrant un tronçon de ligne triphasée muni d'interrupteurs selon un mode de réalisation préféré de la présente invention.
La figure 15 est un schéma bloc d'un appareil selon un mode de réalisation préféré de la présente invention, en relation avec les figures 12, 13 et 14.
La figure 16 est une vue de face d'un pylône supportant une ligne de transport d'énergie électrique sur lequel des appareils selon un mode de réalisation préféré de la présente invention sont montés.
La figure 17 est une vue de côté du pylône montré à la figure 16.
La figure 18 est une vue en perspective d'un élément montré sur les figures 16 et 17.

### Description détaillée des dessins:

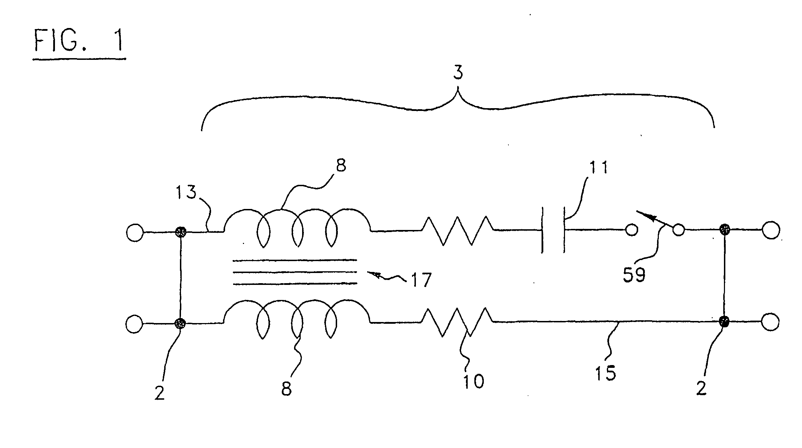

Si l'on se réfère maintenant à la figure 1, on peut voir une ligne de phase d'un tronçon 3 d'une ligne de transport d'énergie électrique qui comporte généralement d'autres lignes de phase (non montrées). Dans le cas présent, la ligne de phase montrée comporte deux conducteurs 13 et 15 isolés électriquement l'un de l'autre et court-circuités entre eux à deux extrémités du tronçon 3 par des courts-circuits 2. Un circuit équivalent de l'inductance propre 8, de l'inductance mutuelle 17 et la résistance 10 est indiqué. Pour les fins de discussion, on néglige les effets capacitifs de la ligne. L'appareil comprend un interrupteur électronique 59 qui pourrait être également une paire d'interrupteurs électromécanique et électronique branchée en parallèle, et une composante passive qui est dans le cas présent un condensateur 11. L'interrupteur 59 et le condensateur 11 sont branchés en série avec le conducteur 13 de la ligne de phase. L'autre conducteur 15 de la ligne de phase est simplement un court-circuit. La représentation simplifiée d'une ligne de phase montrée à la figure 1 permet de comprendre qu'en ouvrant et en fermant l'interrupteur 59 on peut faire varier l'impédance du tronçon 3 de la ligne de transport d'énergie électrique. Un homme de l'art comprendra également que la présente configuration montre les éléments d'un circuit RLC (résistance, inductance et condensateur), et que la valeur du condensateur 11 pourra être choisie en fonction de la fréquence d'opération pour obtenir l'impédance voulue.

L'ajout du condensateur 11 en série avec le conducteur 13 permet d'accroître le courant dans un des deux conducteurs 13 et 15 de la ligne de phase à une valeur supérieure au courant de la ligne de phase qui est la somme des courants passant dans les conducteurs 13 et 15 de la ligne de phase, de manière, par exemple, à favoriser le déglaçage. Ainsi, le déglaçage d'un conducteur d'une ligne de phase est possible même lorsque le courant dans la ligne de phase est inférieur au courant de déglaçage requis. Il est possible de faire passer dans le conducteur le courant de déglaçage requis même si le courant de la ligne de phase aurait une valeur située par exemple entre le courant de déglaçage et la moitié de celui-ci. L'inductance de la ligne constitue l'élément d'un circuit RLC.

L'ajout d'un condensateur en série avec le conducteur 13 permet aussi de changer l'impédance de la ligne c'est-à-dire d'accroître ou de diminuer l'impédance de la ligne selon la valeur du condensateur. Ceci permet de contrôler l'écoulement de puissance dans la ligne. Ce changement d'impédance permet de transférer de la puissance d'une ligne à une autre. L'ajout d'un ou plusieurs appareils selon la présente invention sur plusieurs tronçons d'une ligne de phase permet d'accroître l'effet désiré sur la ligne de transport d'énergie. Avec une distribution appropriée d'appareils selon la présente invention dans un réseau de transport et un contrôle en temps réel de l'impédance des lignes de phase, on peut augmenter la stabilité du réseau et par voie de conséquence la capacité de transite des lignes.

Un appareil selon la présente invention muni d'un condensateur permet de réaliser des FACTS "flexible alternative current transmission systems" en utilisant l'inductance propre et l'inductance mutuelle des conducteurs de la ligne de phase comme élément d'un circuit RLC. Ce mode de réalisation et ceux qui seront décrits dans la présente demande permettent de réaliser des FACTS sans référence à la masse et sans nécessiter d'espace physique dans un poste de transformation, ce qui représente un avantage économique important. La séquence appropriée de commutation des interrupteurs de l'appareil permet d'obtenir l'effet désiré. L'utilisation de l'inductance de la ligne avec un condensateur branché sur la ligne permet de réduire les coûts du FACTS.

L'appareil selon la présente invention muni d'un condensateur permet aussi de filtrer les harmoniques sur une ligne de transmission à courant continu avec des lignes de phase à conducteurs multiples. Au moyen de plusieurs appareils selon la présente invention on peut agir sur plusieurs phases simultanément. L'appareil selon la présente invention peut être utilisé pour amortir ou dissiper de l'énergie par l'ajout de résistances de dissipation à l'extérieur du boîtier de l'appareil et à l'intérieur des quatre conducteurs d'une ligne de phase du côté où les quatre conducteurs sont reliés entre eux. De plus, la présente invention peut être utilisée comme limiteur de courant.

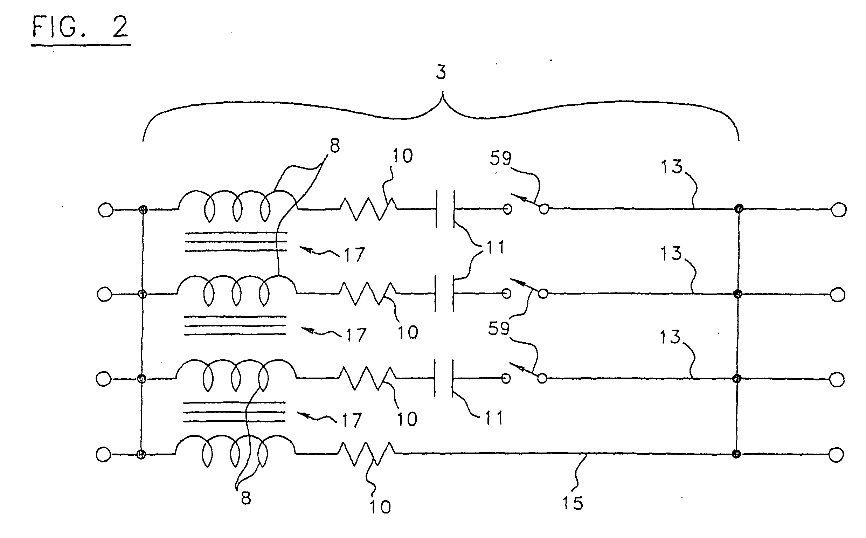

Si l'on se réfère maintenant à la figure 2, on peut voir une ligne de phase d'un tronçon 3, comportant trois conducteurs munis chacun d'un interrupteur 59 et d'un condensateur 11, et un quatrième conducteur 15 qui est un court-circuit. Un homme de l'art comprendra que le circuit montré à la figure 2 offre une plus grande plage de possibilités pour faire varier l'impédance de la ligne de phase en comparaison avec le circuit montré à la figure 1 puisque cette fois-ci trois interrupteurs 59 peuvent être actionnés.

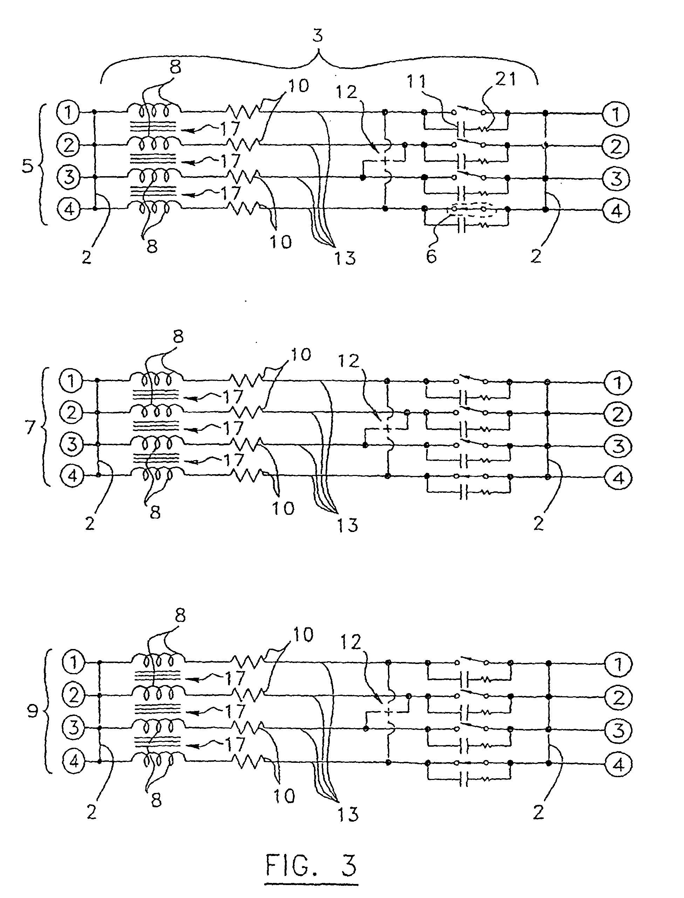

Si l'on se réfère maintenant à la figure 3, on peut voir un tronçon d'une ligne de transport d'énergie électrique muni d'éléments selon un mode de réalisation préféré de la présente invention pour varier l'impédance des lignes de phase du tronçon. Par exemple, la ligne de transport d'énergie est une ligne triphasée de 735 kV.

La ligne de transport d'énergie électrique comporte trois lignes de phase 5, 7 et 9. Chacune des lignes de phase 5, 7 et 9 comporte plusieurs conducteurs 13 isolés électriquement les uns des autres pour conduire le courant de phase. Les conducteurs 13 de chaque ligne de phase sont court-circuités entre eux aux deux extrémités du tronçon 3 par des courts-circuits 2.

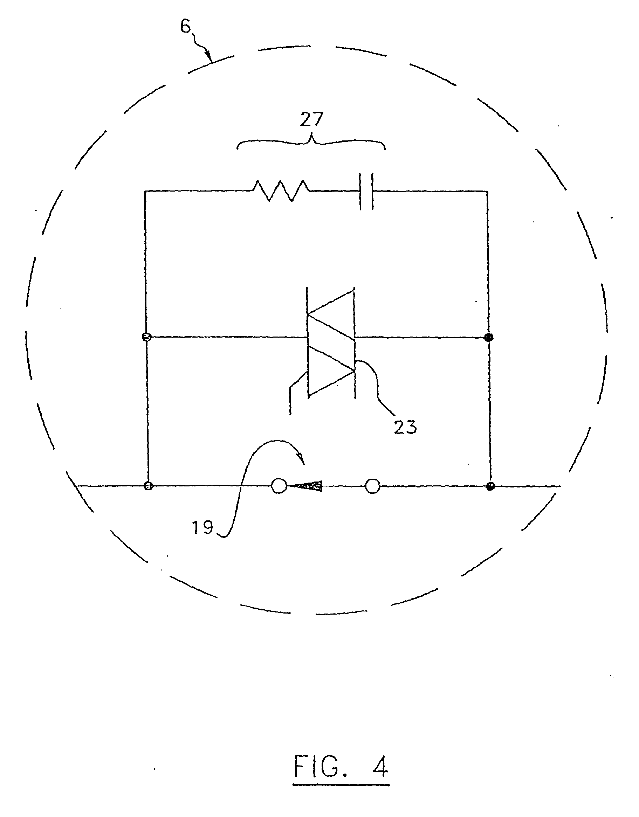

Dans le cas présent, trois appareils selon la présente invention sont respectivement prévus pour les trois lignes de phase 5, 7 et 9. Pour chaque conducteur d'une ligne de phase 5, 7 ou 9, l'appareil comprend une composante passive de préférence dans le cas présent un condensateur 11, et une paire d'interrupteurs électromécanique et électronique 6 branchée en parallèle l'un à l'autre. Toutefois, il n'est pas essentiel que tous les conducteurs 13 d'une ligne de phase soient munis d'une composante passive et d'une paire d'interrupteurs. La paire d'interrupteurs 6 peut être réalisée telle que montrée à la figure 4. Chaque paire d'interrupteurs 6 est apte à connecter et à déconnecter de façon sélective le condensateur correspondant 11 en série avec le conducteur correspondant 13 en réponse à des signaux de commande. Les interrupteurs de chaque paire 6 sont commandables de façon indépendante comme nous le verrons en relation avec la figure 4.

Dans cette figure 3, afin de ne pas surcharger la figure, les repères numériques 6, 11 et 21 ont seulement été montrés en relation avec certains des éléments correspondants que l'on peut voir dans le haut de la figure 3. Toutefois, on doit comprendre que ces repères numériques désignent tous les éléments semblables que l'on retrouve dans les trois lignes de phase 5, 7 et 9. Ainsi, pour chaque ligne de phase 5, 7 ou 9, quatre condensateurs 11 et quatre paires d'interrupteurs 6 sont prévus pour les quatre conducteurs 13. Chaque paire d'interrupteurs 6 est branchée en série avec le conducteur correspondant 13. Chaque condensateur 11 est branché en parallèle avec la paire d'interrupteurs correspondante 6. On peut également voir que chaque condensateur 11 est branché en série avec une résistance de décharge 21 qui est de faible valeur. Ainsi, chaque conducteur 13 peut être fermé pour former un court-circuit en fermant sa paire d'interrupteurs 6 ou peut être mis en série avec un condensateur correspondant en ouvrant sa paire d'interrupteurs 6. Comme on peut le constater, les différents modes d'opération mentionnés ci-dessus sont possibles sur chacun des conducteurs de chacune des lignes de phase 5, 7 et 9. Il en résulte donc une grande marge de manoeuvre pour faire varier l'impédance des lignes de phase du tronçon 3.

Des éclateurs classiques 12 qui peuvent être des éclateurs à semi-conducteur tels que des diodes avalanches ou des varistors, sont prévus pour protéger les isolateurs des palonniers et des entretoises lors d'une surcharge en courant de ligne qui peut induire une surtension entre les conducteurs d'une même ligne de phase.

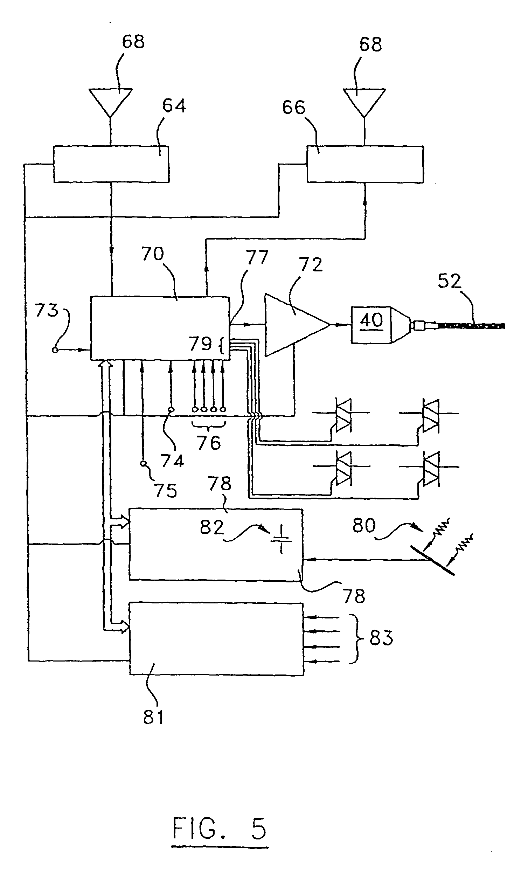

L'appareil comprend également un dispositif de détection pour détecter les conditions d'opération courantes de la ligne de phase correspondante. Ce dispositif de détection est réalisé de préférence par le circuit montré à la figure 5.

L'appareil comprend également un dispositif de commande pour commander chaque paire d'interrupteurs 6 d'une même ligne de phase en fonction des conditions d'opération courantes détectées par le dispositif de détection. Un mode de réalisation préféré de ce dispositif de commande sera décrit en relation avec la figure 5.

Pour des raisons de sécurité, les interrupteurs électromécaniques des paires d'interrupteurs d'une même ligne de phase 5, 7 ou 9 sont actionnés par un mécanisme commun qui ne permet pas que tous les interrupteurs électromécaniques d'une même ligne de phase soient ouverts simultanément de façon à ne jamais ouvrir une ligne de phase.

Selon le mode d'application préféré, la présente invention peut être utilisée pour gérer l'écoulement de puissance dans un tronçon d'une ligne de transport d'énergie électrique en variant l'impédance des lignes de phase avec les paires d'interrupteurs 6. Par exemple, pour changer l'écoulement de puissance sur une bouche de ligne de transmission à 735 kV alimentée par des lignes provenant des barrages éloignés, il suffit de modifier la position d'opération des paires d'interrupteurs des appareils de commutation associés aux lignes de phase pour modifier également l'écoulement de puissance. À cet effet, on peut ouvrir de façon permanente des interrupteurs électromécaniques de paires d'interrupteurs prédéterminées associées à des lignes de phase prédéterminées, et utiliser les interrupteurs électroniques desdites paires d'interrupteurs prédéterminées pour ouvrir et fermer les conducteurs correspondants et ainsi commander en temps réel l'écoulement de puissance et stabiliser le réseau électrique avec une commande fine et active.

Un changement d'impédance sur différentes lignes produit un écoulement de puissance différent. Il existe un très grand nombre de combinaisons possibles en fonction de l'état dans lequel on place les différentes paires d'interrupteurs. L'application décrite ci-dessus s'avère très utile pour effectuer une stabilisation active du réseau par commande dynamique de l'écoulement de puissance.

En se référant maintenant à la figure 4, on peut voir comment sont réalisées les paires d'interrupteurs 6. La paire d'interrupteurs 6 comprend un interrupteur électronique 23 en parallèle avec un interrupteur électromécanique 19 pour former une paire d'interrupteurs électromécanique et électronique 6. Selon un mode de réalisation préféré, l'interrupteur électronique 23 est utilisé pour permettre les transitions de l'interrupteur électromécanique correspondant et est asservi à ce dernier. Cependant, selon un autre mode de réalisation préféré, on peut utiliser l'interrupteur électronique 23 pour prendre la relève de l'interrupteur électromécanique 19 si ce dernier, suite à un défaut, demeure en position ouverte pour certains conducteurs de la ligne de phase.

L'interrupteur électronique 23 est muni d'un amortisseur 27 et d'un circuit de protection non montré. L'interrupteur électronique 23 est utilisé lorsque l'on veut faire commuter l'interrupteur électromécanique de manière à supprimer la tension aux bornes de l'interrupteur électromécanique pendant la commutation. Lorsqu'un signal de fermeture est envoyé à la paire d'interrupteurs 6, l'interrupteur électronique 23 ferme avant l'interrupteur électromécanique, et lorsqu'un signal d'ouverture est envoyé, l'interrupteur électromécanique 19 ouvre avant l'interrupteur électronique 23. L'interrupteur électronique 23 peut être par exemple un thyristor, triac, GTO, MOSFET, IGBT, etc.

Pour réaliser une commande de l'écoulement de puissance, l'interrupteur électronique 23 doit pouvoir être commandé par une commande venant de l'extérieur à travers un dispositif de commande. Ce dispositif de commande permet de changer en temps réel l'écoulement de puissance du réseau en changeant dynamiquement l'impédance des lignes, en commandant uniquement les interrupteurs électroniques 23 après avoir ouvert les interrupteurs électromécaniques 19 sur certains conducteurs. Cette commande peut s'effectuer à partir d'une unité centrale qui analyse l'écoulement de puissance et envoie des signaux appropriés aux différents dispositifs de commande pour ouvrir ou fermer, en régime dynamique, les différents interrupteurs électroniques.

En se référant maintenant à la figure 5, on peut voir un mode de réalisation préférentiel d'un appareil selon la présente invention qui comprend entre autres un dispositif de commande et un dispositif de détection pour commander les paires d'interrupteurs d'une des lignes de phase montrée à la figure 3. L'appareil comprend un processeur 70 ayant un port d'entrée 74 pour recevoir des signaux indicatifs des positions d'opération des interrupteurs électromécaniques, des ports d'entrée 76 pour recevoir des signaux indicatifs des tensions de borne des paires d'interrupteurs, un port d'entrée 73 pour recevoir des signaux indicatifs du courant de phase dans la ligne de phase, un port d'entrée 75 pour compter les tours de la vis mère 52, et des sorties 77 ou 79 pour générer des signaux de commande. L'unité comprend également un émetteur radio fréquence 66 branché au processeur 70 pour émettre des signaux indicatifs des positions d'opération des interrupteurs, des tensions aux bornes des paires d'interrupteurs, des nombres de tours effectués par la vis mère, et du courant de phase dans la ligne de phase. Un récepteur radio fréquence 64 est également prévu. Le récepteur 64 et l'émetteur 66 sont respectivement munis d'antenne 68. Le récepteur 64 est branché au processeur 70 pour recevoir des signaux radio fréquence de commande à partir desquels les signaux de commande sont produits. L'unité comprend également un amplificateur 72 branché au processeur 70 pour commander le moteur 40 en fonction des signaux de commande. L'amplificateur 72 et le moteur 40 sont reliés au contrôle de la partie électromécanique des paires d'interrupteurs 6 montrées aux figures 3 et 4.

Un dispositif d'alimentation électrique est prévu pour alimenter le processeur 70, le récepteur 64, l'émetteur 66 et l'amplificateur 72. Ce dispositif d'alimentation électrique comprend une première source d'alimentation électrique 78 comportant une batterie 82 et un capteur solaire 80 branché à la batterie 82. Ce dispositif de l'alimentation électrique comprend également une seconde source d'alimentation électrique 81 branchée en parallèle à la première source d'alimentation électrique 78, et ayant des entrées 83 branchées aux conducteurs de la ligne de phase. Ainsi, lorsqu'un des conducteur est ouvert, l'alimentation peut se faire à partir de ce conducteur au moyen de l'alimentation 81 via une des entrées 83.

Le port d'entrée 75 est relié à un compte-tour de la vis mère 52 pour connaître sa position. Le port 74 sert à recevoir un signal représentatif de la position d'un chariot qui est déplacé par la vis mère 52. Chaque chariot regroupe l'ensemble des interrupteurs électromécaniques des paires d'interrupteurs de la ligne de phase. La position du chariot est représentative de la position de chacun des interrupteurs électromécaniques qui y sont associés.

Le récepteur 64 et l'émetteur 66 permettent respectivement de recevoir et d'émettre des signaux radio fréquence. Les paires d'interrupteurs sont actionnées en fonction des signaux radio fréquence reçus. Les signaux radio fréquence émis par l'émetteur 66 permettent de confirmer la réception des signaux radio fréquence de commande et éventuellement de confirmer leur exécution. Le récepteur 64 est apte en permanence à recevoir les signaux radio fréquence à distance qui sont codés.

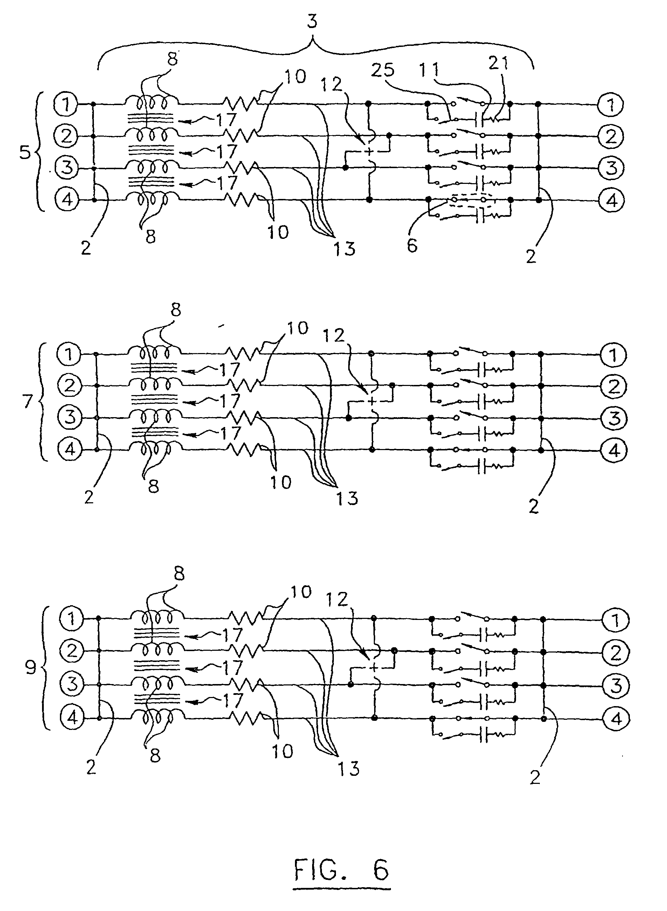

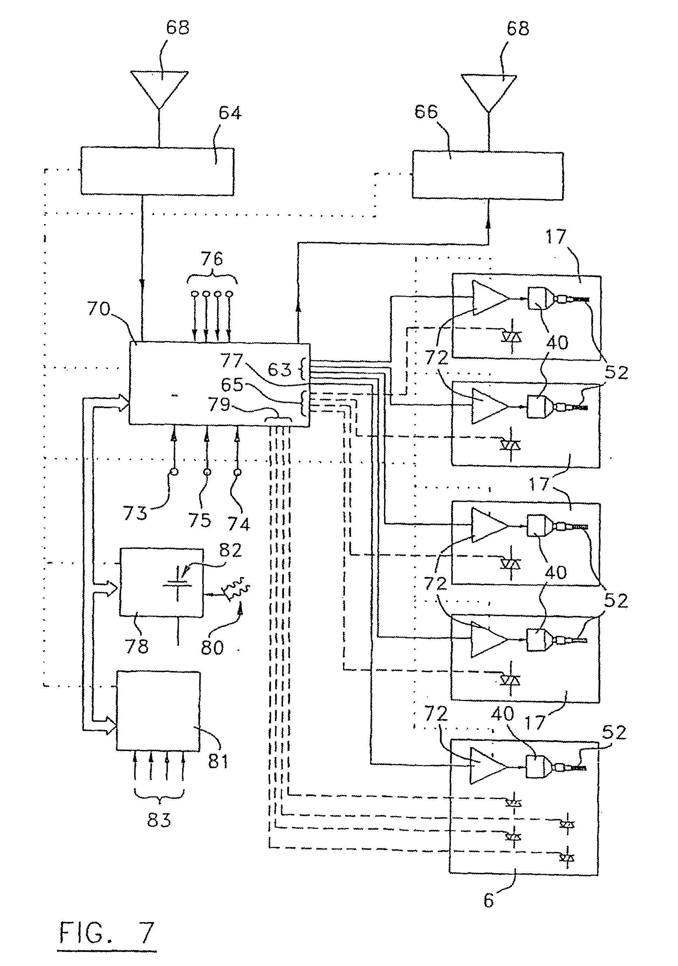

Si l'on se réfère maintenant à la figure 6, on peut voir un circuit semblable à celui montré à la figure 3 à l'exception du fait qu'il comprend de façon additionnelle des paires d'interrupteurs électromécanique et électronique 25. Il est donc possible d'ouvrir complètement un conducteur 13 en ouvrant les paires d'interrupteurs correspondantes 6 et 25. Pour chaque conducteur 13, une nouvelle possibilité de variation d'impédance est donc offerte. Ces paires d'interrupteurs 25 peuvent être réalisées de façon semblable à celle montrée à la figure 4 mais elles pourraient aussi être remplacées par des interrupteurs électroniques. Les interrupteurs d'une paire d'interrupteurs 25 sont contrôlés de façon indépendante comme cela sera expliqué en relation avec la figure 7.

En se référant maintenant à la figure 7, on peut voir un mode de réalisation préférentiel d'un appareil selon la présente invention qui comprend un dispositif de détection, un dispositif de commande et les paires d'interrupteurs montrées à la figure 6.

L'appareil comprend un processeur 70 ayant un port d'entrée 74 pour recevoir des signaux indicatifs des positions d'opération des interrupteurs électromécaniques des paires d'interrupteurs 6, des ports d'entrée 76 pour recevoir des signaux indicatifs des tensions de borne des paires d'interrupteurs 6, un port d'entrée 73 pour recevoir des signaux indicatifs du courant de phase dans la ligne de phase, un port d'entrée 75 pour compter les tours des vis mères 52, et des sorties 63, 65, 77 et 79 pour générer des signaux de commande.

Le port d'entrée 75 est relié à des compte-tours des vis mères 52 pour connaître leur position. Le port 74 sert à recevoir un signal représentatif de la position du chariot déplacé par la vis mère 52 des paires d'interrupteurs 6. Le chariot regroupe l'ensemble des interrupteurs électromécaniques des paires d'interrupteurs 6 de la ligne de phase. La position du chariot est donc représentative de la position de chacun des interrupteurs électromécaniques qui y sont associés.

L'émetteur 66 qui fonctionne de façon intermittente ou en continu confirme la commande reçue, le temps d'exécution de la commande, l'état des batteries et la tension dans les conducteurs. L'information relative à la tension aux bornes du conducteur ouvert permet en même temps de déterminer le courant qui passe à travers les autres conducteurs qui sont fermés. Un récepteur et un émetteur de zone qui ne sont pas illustrés sont également prévus pour recevoir des données d'une cellule de charge (non montré) montée sur la ligne de phase et retransmettre les données reçues de la cellule de charge à distance à un poste de commande central (non montré).

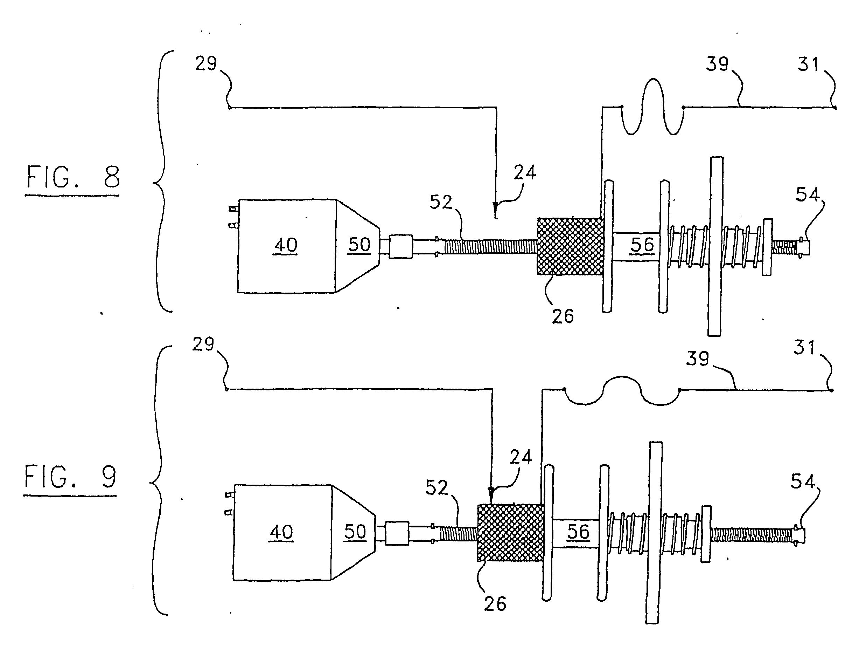

En se référant maintenant aux figures 8 et 9, on peut voir un mode de réalisation préférentiel de la partie électromécanique des paires d'interrupteurs 25 montrées aux figures 6 et 7 dans des positions ouverte et fermée, respectivement. Il s'agit d'un interrupteur électromécanique qui comprend deux bornes 29 et 31, et un berceau 56 apte à se déplacer le long de la vis mère 52. Ce berceau 56 comporte un contact de conducteurs mobiles 26 ayant une surface conductrice apte à entrer en contact avec le curseur conducteur 24.

Un dispositif moteur est prévu pour déplacer le berceau 56 en actionnant la vis mère 52. Ce dispositif moteur est contrôlé par le dispositif de commande montré à la figure 7. Ce dispositif moteur comprend un moteur 40, et un réducteur de vitesse 50 couplé au moteur 40. La vis mère 52 a une extrémité connectée au réducteur de vitesse 50, et une autre extrémité 54 reliée à un point d'ancrage dans le boîtier (non montré). Des câbles flexibles 39 connectent le contact conducteur mobile 26 à la borne 31.

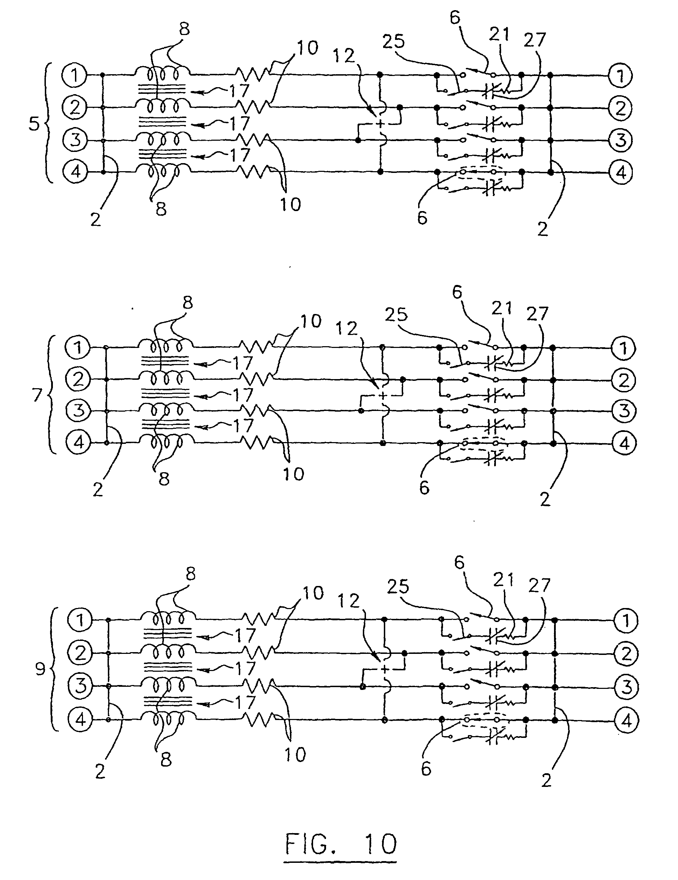

Si l'on se réfère maintenant au circuit montré à la figure 10, on peut voir un circuit semblable à celui montré à la figure 6 toutefois, dans ce cas-ci, chacun des condensateurs est un condensateur 27 variable et commandable par le dispositif de commande de l'appareil. Ainsi, l'appareil selon la présente invention tel que montré à la figure 10 permet encore plus de possibilités de variations de l'impédance d'une ligne de phase.

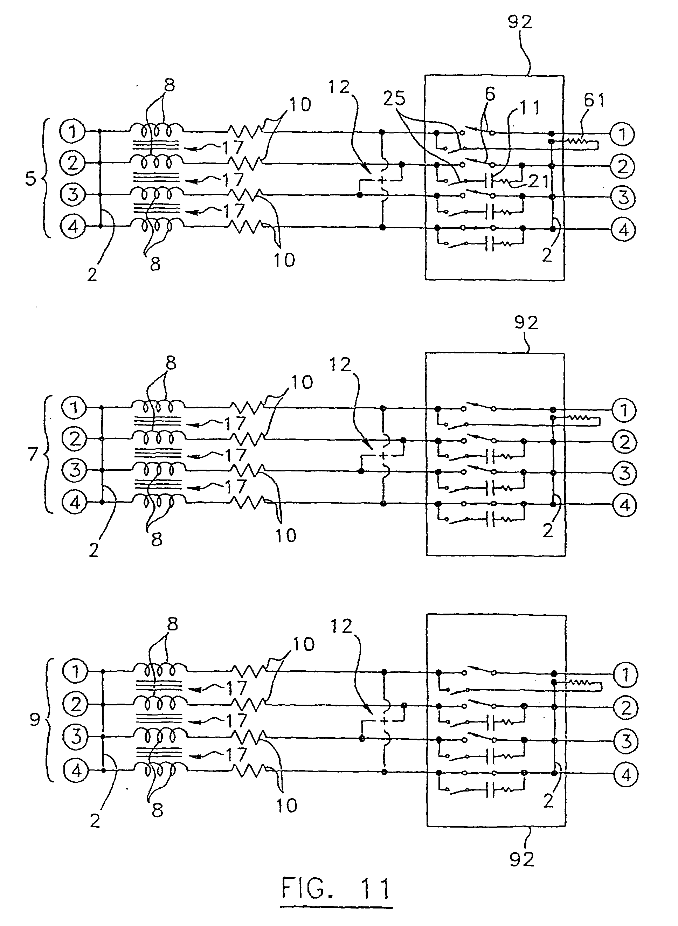

Si l'on se réfère maintenant aux figures 11, 16 et 18, on peut voir, selon un mode de réalisation préféré de la présente invention, les boîtiers 92 des appareils prévus pour contenir chacun les paires d'interrupteurs d'une ligne de phase, un dispositif de détection et un dispositif de commande. Comme on peut le voir plus spécifiquement sur la figure 11, pour chaque ligne de phase, quatre composantes passives 11 et 61 et quatre paires d'interrupteurs 6 sont prévues. Chaque paire d'interrupteurs 6 est branchée en série avec le conducteur correspondant. Chaque composante passive 61 ou 11 est branchée en parallèle avec la paire d'interrupteurs correspondante 6. Les composantes passives prévues sur trois des quatre conducteurs sont des condensateurs 11, tandis que la composante passive prévue sur le quatrième conducteur est une résistance de puissance 61. La résistance de puissance 61 a une borne branchée à une extrémité du tronçon où les conducteurs sont court-circuités, et elle est physiquement localisée à l'intérieur du volume délimité par les quatre conducteurs de la ligne de phase, et à l'extérieur du boîtier 92 correspondant. Ce mode de réalisation permet une commutation avec amortisseur.

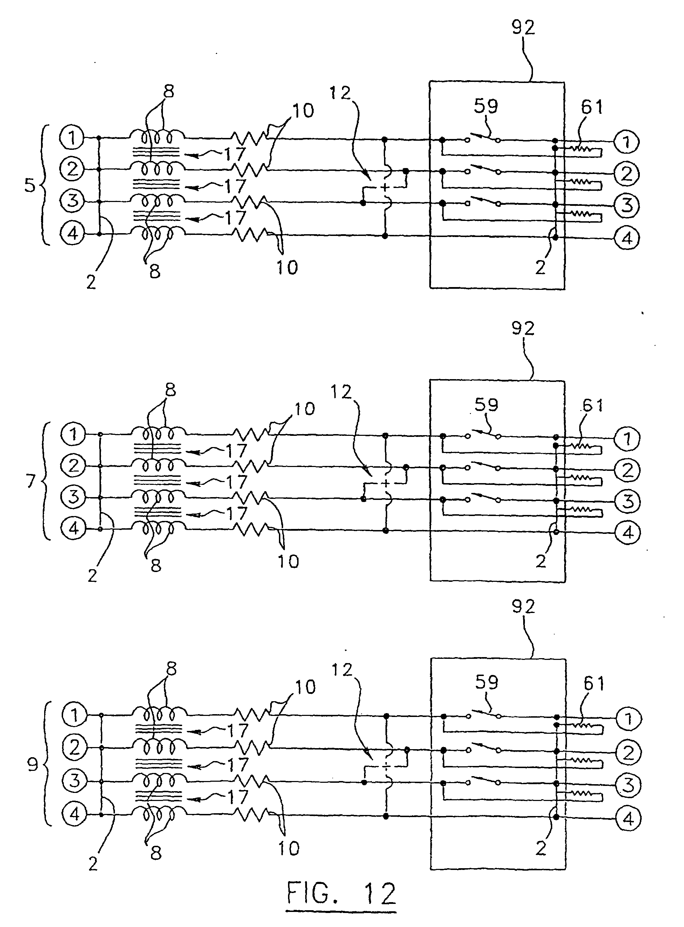

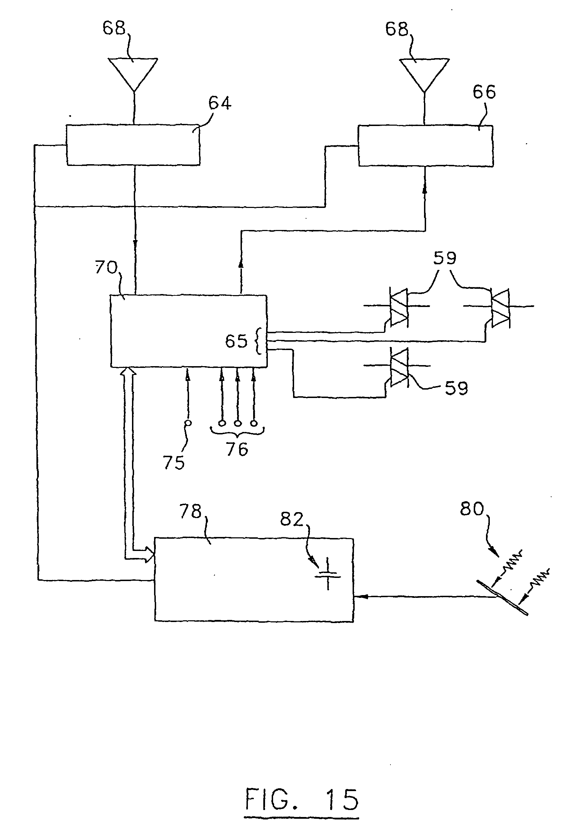

Si l'on se réfère maintenant à la figure 12, on peut voir un autre mode de réalisation préférentiel selon la présente invention. Selon ce mode de réalisation, chaque appareil comprend pour chacun d'au plus trois des quatre conducteurs d'une ligne de phase, un interrupteur électronique 59 apte à ouvrir et à fermer de façon sélective le conducteur correspondant en réponse à des signaux de commande. Chaque appareil comprend également un dispositif de détection et un dispositif de commande qui seront décrits avec plus de détails en relation avec la figure 15. De plus, chaque appareil comprend un boîtier 92 pour contenir des interrupteurs électroniques 59, un dispositif de détection et un dispositif de commande. Selon ce mode de réalisation, pour chaque ligne de phase, trois interrupteurs électroniques 59 sont prévus pour trois des quatre conducteurs d'une ligne de phase. Pour chacun des trois conducteurs, l'interrupteur électronique est branché en série avec le conducteur correspondant, et une résistance de puissance 61 est branchée en parallèle avec l'interrupteur électronique correspondant 59. Chaque résistance de puissance 61 a une borne branchée à une extrémité 2 du tronçon où les conducteurs sont court-circuités. Chaque résistance de puissance 61 est physiquement localisée à l'intérieur du volume délimité par les quatre conducteurs de la ligne de phase correspondante et à l'extérieur du boîtier 92. Ce dispositif réalise un circuit amortisseur.

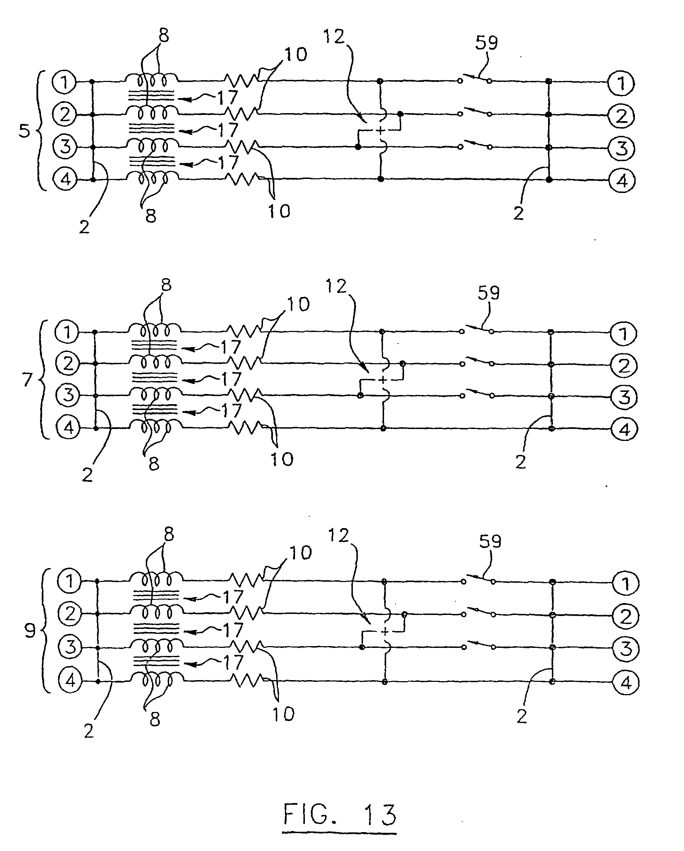

Si l'on se réfère maintenant à la figure 13, on peut voir une configuration qui réalise un circuit limiteur de courant. Cette configuration est semblable à celle montrée dans la figure 12 toutefois il n'y a pas de résistance de puissance branchée en parallèle avec les interrupteurs électroniques 59. Un homme versé dans l'art comprendra aisément quand en actionnant les interrupteurs 59 on peut limiter le courant qui passe à travers chaque ligne de phase.

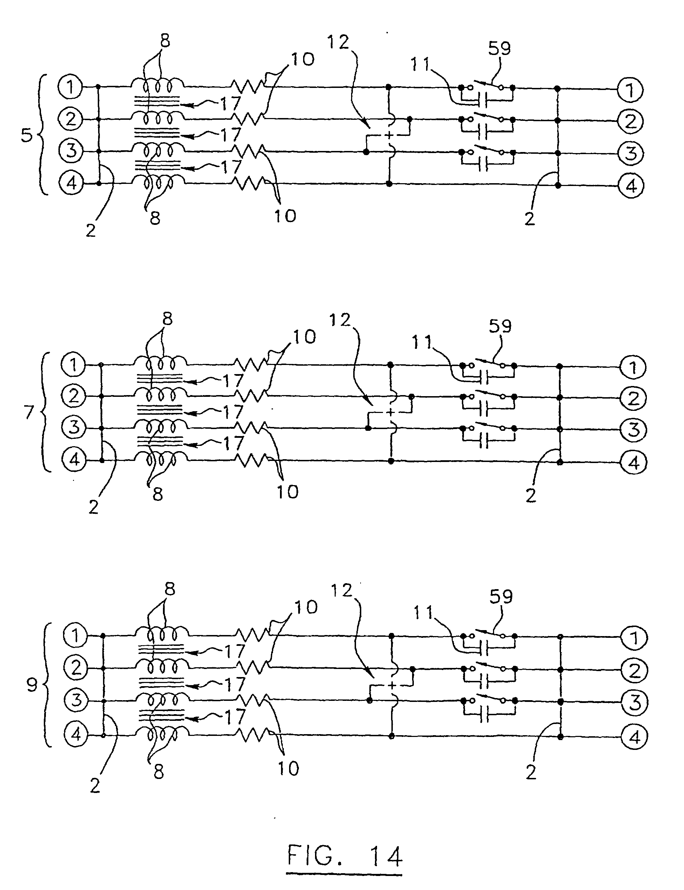

Si l'on se réfère maintenant à la figure 14, on peut voir une configuration qui réalise un circuit limiteur de courant avec condensateur. Cette configuration est semblable à celle montrée à la figure 12 toutefois des condensateurs 11 remplacent les résistances de puissance. Un homme versé dans l'art comprendra aisément qu'en actionnant les interrupteurs 59 on peut limiter le courant à travers chacune des lignes de phase.

En se référant maintenant à la figure 15, on peut voir un mode de réalisation préférentiel d'un appareil selon la présente invention pour commander les interrupteurs électroniques 59 montrés aux figures 12, 13 et 14. L'appareil comprend trois interrupteurs électroniques 59, un dispositif de détection et un dispositif de commande.

Le processeur 70 a des ports d'entrée 76 pour recevoir des signaux indicatifs des tensions aux bornes des interrupteurs électroniques, et un port d'entrée 75 pour recevoir des signaux indicatifs du courant de phase dans la ligne de phase. Le dispositif de détection comprend un émetteur radio fréquence 66 branché au processeur 70 pour émettre des signaux indicatifs des tensions aux bornes des interrupteurs électroniques 59 et du courant de phase, et une source d'alimentation électrique 78 pour alimenter le processeur 70 et l'émetteur 66. Le dispositif de commande comprend le processeur 70 qui comporte en outre des sorties 65 pour émettre les signaux de commande pour commander les interrupteurs électroniques 59. Le dispositif de commande comprend également un récepteur radio fréquence 64 branché au processeur 70 pour recevoir des signaux radio fréquence de commande à partir desquels des signaux de commande sont produits, et la source d'alimentation électrique 78 pour alimenter en outre le récepteur 64. La source d'alimentation électrique 78 comporte une batterie 82 et un capteur solaire 80 branché à la batterie 82.

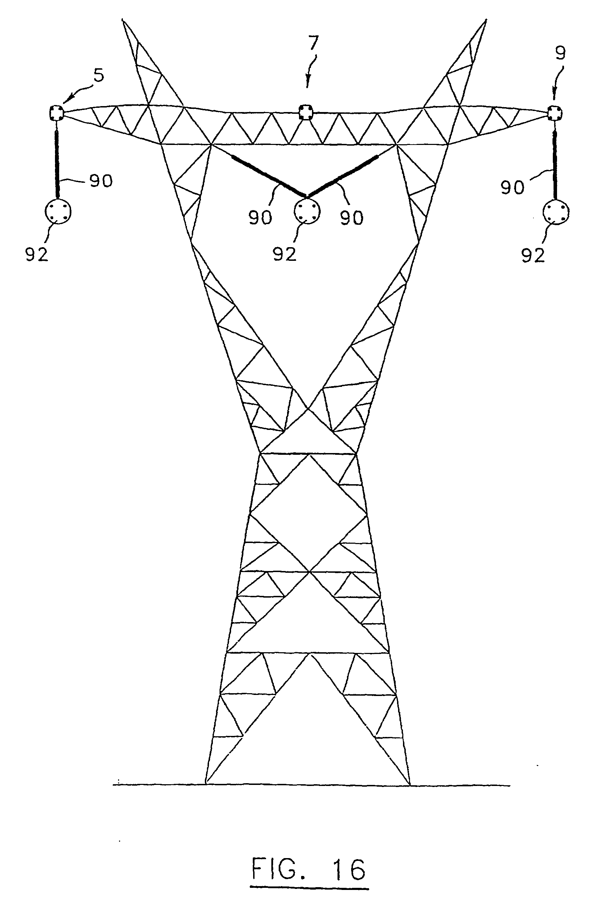

En se référant maintenant à la figure 16, on peut voir une vue de face d'un pylône muni d'appareils dont on peut voir les boîtiers 92, selon la présente invention. Les boîtiers 92 sont supportés par des supports 90. Chaque boîtier 92 contient un des appareils montrés aux figures 5, 7 et 15.

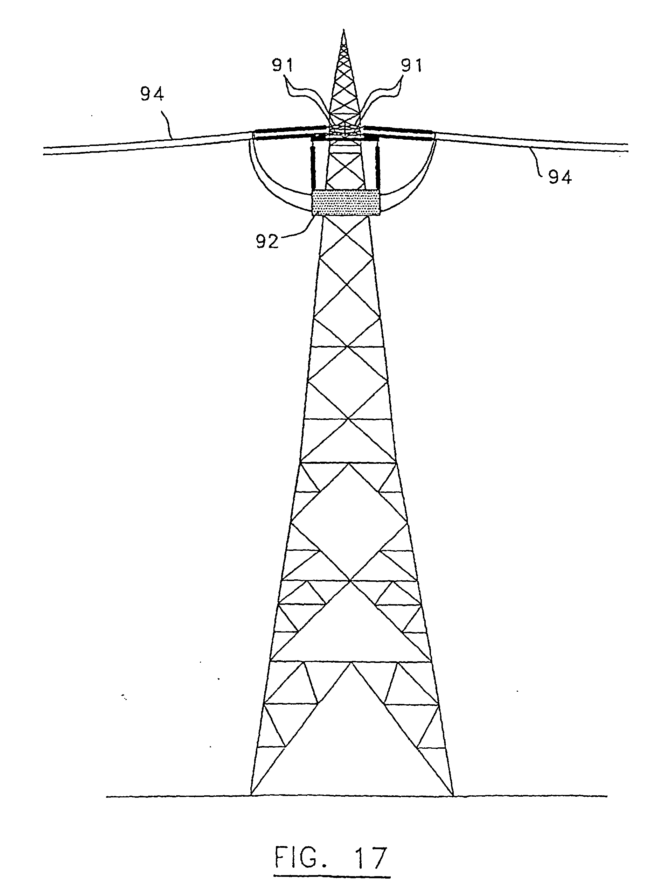

En se référant maintenant à la figure 17, on peut voir une vue de côté du pylône montré à la figure 16. Sur cette figure 17, on peut voir que les boîtiers 92 n'ont pas à supporter la tension mécanique qui est présente dans la ligne de transmission 94. De plus, on peut voir quatre cellules de charge 91 qui sont montées sur les quatre lignes de phase.

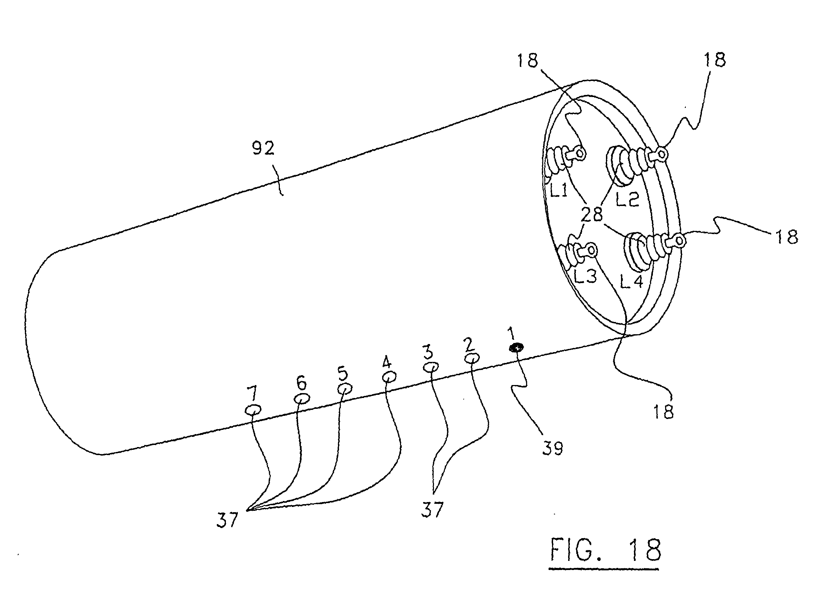

En se référant maintenant à la figure 18, on peut voir une vue en perspective d'un des boîtiers 92 montrés aux figures 16 et 17. Plus particulièrement, le boîtier montré à la figure 18 contient l'appareil montré à la figure 7. On peut voir les bornes de commutation 18 de l'appareil, ainsi que des isolateurs de traverse 28. On peut voir également des ouvertures 37 ainsi qu'une bille 39 indicatrice qui sert à indiquer la position des interrupteurs électromécaniques des paires d'interrupteurs 6 à un technicien se trouvant sur les lieux.

## Revendications

1. Un appareil de commutation pour varier l'impédance d'une ligne de phase d'un tronçon d'une ligne de transport d'énergie électrique, la ligne de phase comportant n conducteurs isolés électriquement les uns des autres et court-circuités entre eux à deux extrémités du tronçon, l'appareil comprenant:
pour chacun d'au moins un des n conducteurs, une composante passive et une paire d'interrupteurs électromécanique et électronique branchés en parallèle l'un à l'autre sont prévues, la paire d'interrupteurs étant apte à connecter et déconnecter de façon sélective la composante passive en série avec le conducteur correspondant en réponse à des signaux de commande, les interrupteurs de chaque paire étant commandables de façon indépendante;
des moyens de détection pour détecter des conditions d'opération courantes de la ligne de phase; et
des moyens de commande pour commander chaque paire d'interrupteurs en fonction des conditions d'opération courantes détectés par les moyens de détection.

2. Appareil selon la revendication 1, dans lequel chacune des composantes passives est un condensateur.

3. Appareil selon la revendication 2, dans lequel:
pour au plus n-1 conducteurs, n-1 condensateurs et n-1 paires d'interrupteurs sont prévus;
les n-1 paires d'interrupteurs sont respectivement branchées en série avec les n-1 conducteurs; et
les n-1 condensateurs sont respectivement branchés en série avec les n-1 paires d'interrupteurs.

4. Appareil selon la revendication 2, dans lequel:
n condensateurs et n paires d'interrupteurs sont prévus pour les n conducteurs;
les n paires d'interrupteurs sont respectivement branchées en série avec les n conducteurs; et
les n condensateurs sont respectivement branchés en parallèle avec les n paires d'interrupteurs.

5. Appareil selon la revendication 1, comprenant un boîtier pour contenir les paires d'interrupteurs, les moyens de détection et les moyens de commande, et dans lequel:
n composantes passives et n paires d'interrupteurs sont prévues pour les n conducteurs;
les n paires d'interrupteurs sont respectivement branchées en série avec les n conducteurs;
les n composantes passives sont respectivement branchées en parallèle avec les n paires d'interrupteurs;
un commutateur est branché en série avec chacune des composantes passives;
les composantes passives prévues pour n-1 des n conducteurs sont des condensateurs; et
la composante passive prévue pour le nième conducteur est une résistance de puissance, la résistance de puissance ayant une borne branchée à une extrémité du tronçon où les conducteurs sont court-circuités, la résistance de puissance étant physiquement localisée à l'intérieur d'un volume délimité par les n conducteurs et à l'extérieur du boîtier.

6. Appareil selon la revendication 1, dans lequel:
pour au plus n-1 des n conducteurs, n-1 composantes passives et n-1 paires d'interrupteurs sont prévues;
les n-1 paires d'interrupteurs sont respectivement branchées en série avec les n-1 conducteurs; et
les n-1 composantes passives sont respectivement branchées en parallèle avec les n-1 paires d'interrupteurs.

7. Appareil selon la revendication 6, dans lequel chacune des composantes passives est une résistance de puissance.

8. Appareil selon la revendication 6, dans lequel chacune des composantes passives est un condensateur.

9. Appareil selon la revendication 4, dans lequel chaque condensateur est branché en série avec une résistance de décharge.

10. Appareil selon la revendication 9, comprenant en outre des commutateurs branchés respectivement en série avec les condensateurs, chacun des commutateurs étant commandable par les moyens de commande.

11. Appareil selon la revendication 10, dans lequel chacun des commutateurs comprend une paire d'interrupteurs électromécanique et électronique branchés en parallèle et commandables de façon indépendante par les moyens de commande.

12. Appareil selon la revendication 10, dans lequel chacun des condensateurs est un condensateur variable et commandable par les moyens de commande.

13. Appareil selon la revendication 5, dans lequel chacun des commutateurs comprend une paire d'interrupteurs électromécanique et électronique branchés en parallèle et commandables de façon indépendante par les moyens de commande.

14. Un appareil selon la revendication 1, dans lequel:
les moyens de détection comprennent:
un processeur ayant un premier port d'entrée pour recevoir des signaux indicatifs des positions d'opération des paires d'interrupteurs, des deuxièmes ports d'entrée pour recevoir des signaux indicatifs des tensions aux bornes des paires d'interrupteurs, et un troisième port d'entrée pour recevoir des signaux indicatifs du courant de phase;
un émetteur radiofréquence branché au processeur pour émettre des signaux indicatifs des positions d'opération des interrupteurs électromécaniques des paires d'interrupteurs, des tensions aux bornes des paires d'interrupteurs et du courant de phase; et
des moyens d'alimentation électrique pour alimenter le processeur et l'émetteur;
les moyens de commande comprennent:
le processeur qui comporte en outre des sorties pour émettre les signaux de commande pour commander toutes les paires d'interrupteurs électromécanique et électronique;
un récepteur radiofréquence branché au processeur pour recevoir des signaux radiofréquences de commande à partir desquels les signaux de commande sont produits; et
les moyens d'alimentation électrique pour alimenter en outre le récepteur et l'amplificateur.

15. Un appareil de commutation pour varier l'impédance d'une ligne de phase d'un tronçon d'une ligne de transport d'énergie électrique, la ligne de phase comportant n conducteurs isolés électriquement les uns des autres et court-circuités entre eux à deux extrémités du tronçon, l'appareil comprenant:
pour chacun d'au plus n-1 des n conducteurs, un interrupteur électronique apte à ouvrir ou fermer de façon sélective le conducteur correspondant en réponse à des signaux de commande;
des moyens de détection pour détecter des conditions d'opération courantes de la ligne de phase; et
des moyens de commande pour commander l'interrupteur électronique en fonction des conditions d'opération courantes détectées par les moyens de détection.

16. Appareil selon la revendication 15, comprenant un boîtier pour contenir les interrupteurs électroniques, les moyens de détection et les moyens de commande, et dans lequel:
n-1 interrupteurs électroniques sont prévus pour les n-1 conducteurs;
les n-1 interrupteurs électroniques sont respectivement branchés en série avec les n-1 conducteurs; et
une résistance de puissance est branchée en parallèle avec chacun des n-1 interrupteurs électroniques, la résistance de puissance ayant une borne branchée à une extrémité du tronçon où les conducteurs sont court-circuités, la résistance de puissance étant physiquement localisée à l'intérieur d'un volume délimité par les n conducteurs et à l'extérieur du boîtier.

17. Un appareil selon la revendication 15, dans lequel:
les moyens de détection comprennent:
un processeur ayant des premiers ports d'entrée pour recevoir des signaux indicatifs des tensions aux bornes des interrupteurs électroniques, et un deuxième port d'entrée pour recevoir des signaux indicatifs du courant de phase;
un émetteur radiofréquence branché au processeur pour émettre des signaux indicatifs des tensions aux bornes des interrupteurs électroniques, et du courant de phase; et
des moyens d'alimentation électrique pour alimenter le processeur, et l'émetteur;
les moyens de commande comprennent:
le processeur qui comporte en outre des sorties pour émettre les signaux de commande pour commander les interrupteurs électroniques;
un récepteur radiofréquence branché au processeur pour recevoir des signaux radiofréquences de commande à partir desquels les signaux de commande sont produits; et
les moyens d'alimentation électrique pour alimenter en outre le récepteur.

18. Une méthode de commutation pour varier l'impédance d'une ligne de phase d'un tronçon d'une ligne de transport d'énergie électrique, la ligne de phase comportant n conducteurs isolés électriquement les uns des autres et court-circuités entre eux à deux extrémités du tronçon, la méthode comprenant les étapes suivantes:
(a) détecter des conditions d'opération courantes de la ligne de phase; et
(b) commander des paires d'interrupteurs électromécanique et électronique branchés en parallèle l'un à l'autre en fonction des conditions d'opération courantes détectées à l'étape (a) pour connecter et déconnecter de façon sélective au moins une composante passive branchée respectivement en série avec au moins un des n conducteurs en réponse à des signaux de commande, les interrupteurs de chaque paire étant commandables de façon indépendante.

19. Une méthode de commutation pour varier l'impédance d'une ligne de phase d'un tronçon d'une ligne de transport d'énergie électrique, la ligne de phase comportant n conducteurs isolés électriquement les uns des autres et court-circuités entre eux à deux extrémités du tronçon, la méthode comprenant les étapes suivantes:
(a) détecter des conditions d'opération courantes de la ligne de phase; et
(b) commander des interrupteurs électroniques en fonction des conditions d'opération courantes détectées à l'étape (a) pour ouvrir ou fermer de façon sélective au plus n-1 des n conducteurs en réponse à des signaux de commande.

## Patentansprüche

1. Umschaltvorrichtung zum Verändern der Impedanz einer Phasenleitung eines Teilstücks einer Leitung für den Transport elektrischer Energie, wobei die Phasenleitung n voneinander elektrisch isolierte und an zwei Enden des Teilstücks miteinander kurzgeschlossene Leiter aufweist, wobei die Vorrichtung umfasst:
für jeweils wenigstens einen der n Leiter eine passive Komponente und ein Paar elektromechanischer und elektronischer Ein/Aus-Schalter, die zueinander parallelgeschaltet sind, wobei das Paar von Ein/Aus-Schaltern in Reaktion auf Steuersignale wahlweise die passive Komponente mit dem entsprechenden Leiter in Reihe schalten und von ihm trennen kann, wobei die Ein/Aus-Schalter jedes Paars unabhängig steuerbar sind;
Erfassungsmittel zum Erfassen der momentanen Betriebsbedingungen der Phasenleitung; und
Steuermittel zum Steuern jedes Paars von Ein/Aus-Schaltern in Abhängigkeit von den durch die Erfassungsmittel erfassten momentanen Betriebsbedingungen.

2. Vorrichtung nach Anspruch 1, bei der jede der passiven Komponenten ein Kondensator ist.

3. Vorrichtung nach Anspruch 2, bei der:
für höchstens n - 1 Leiter n - 1 Kondensatoren und n - 1 Paare von Ein/Aus-Schaltern vorgesehen sind;
die n - 1 Paare von Ein/Aus-Schaltern mit n - 1 Leitern jeweils in Reihe geschaltet sind; und
die n - 1 Kondensatoren mit den n - 1 Paaren von Ein/Aus-Schaltern jeweils in Reihe geschaltet sind.

4. Vorrichtung nach Anspruch 2, bei der:
n Kondensatoren und n Paare von Ein/Aus-Schaltern für die n Leiter vorgesehen sind;
die n Paare von Ein/Aus-Schaltern mit den n Leitern jeweils in Reihe geschaltet sind; und
die n Kondensatoren mit den n Paaren von Ein/Aus-Schaltern jeweils parallelgeschaltet sind.

5. Vorrichtung nach Anspruch 1, die ein Gehäuse aufweist, das die Paare von Ein/Aus-Schaltern, die Erfassungsmittel und die Steuermittel enthält, und in der:
n passive Komponenten und n Paare von Ein/Aus-Schaltern für die n Leiter vorgesehen sind;
die n Paare von Ein/Aus-Schaltern mit den n Leitern jeweils in Reihe geschaltet sind;
die n passiven Komponenten mit den n Paaren von Ein/Aus-Schaltern jeweils parallelgeschaltet sind;
ein Umschalter mit jeder der passiven Komponenten in Reihe geschaltet ist;
die passiven Komponenten, die für n - 1 der n Leiter vorgesehen sind, Kondensatoren sind; und
die passive Komponente, die für den n-ten Leiter vorgesehen ist, ein Leistungswiderstand ist, wobei der Leistungswiderstand einen Anschluss besitzt, der an ein Ende des Teilstücks angeschlossen ist, wo die Leiter kurzgeschlossen sind, wobei sich der Leistungswiderstand räumlich innerhalb eines Volumens, das durch die n Leiter begrenzt ist, und außerhalb des Gehäuses befindet.

6. Vorrichtung nach Anspruch 1, bei der:
für höchstens n - 1 der n Leiter n - 1 passive Komponenten und n - 1 Paare von Ein/Aus-Schaltern vorgesehen sind;
die n - 1 Paare von Ein/Aus-Schaltern mit n - 1 Leitern jeweils in Reihe geschaltet sind; und
die n - 1 passiven Komponenten mit den n - 1 Paaren von Ein/Aus-Schaltern jeweils paraffelgeschaltet sind.

7. Vorrichtung nach Anspruch 6, bei der jede der passiven Komponenten ein Leistungswiderstand ist.

8. Vorrichtung nach Anspruch 6, bei der jede der passiven Komponenten ein Kondensator ist.

9. Vorrichtung nach Anspruch 4, bei der jeder Kondensator mit einem Entladungswiderstand in Reihe geschaltet ist.

10. Vorrichtung nach Anspruch 9, die außerdem Umschalter umfasst, die jeweils in Reihe mit den Kondensatoren geschaltet sind, wobei jeder der Umschalter durch die Steuermittel steuerbar ist.

11. Vorrichtung nach Anspruch 10, bei der jeder der Umschalter ein Paar elektromechanischer und elektronischer Ein/Aus-Schalter umfasst, die parallelgeschaltet und durch die Steuermittel unabhängig steuerbar sind.

12. Vorrichtung nach Anspruch 10, bei der jeder der Kondensatoren ein variabler und durch die Steuermittel steuerbarer Kondensator ist.

13. Vorrichtung nach Anspruch 5, bei der jeder der Umschalter ein Paar elektromechanischer und elektronischer Ein/Aus-Schalter umfasst, die parallelgeschaltet und durch die Steuermittel unabhängig steuerbar sind.

14. Vorrichtung nach Anspruch 1, bei der:
die Erfassungsmittel umfassen:
einen Prozessor, der einen ersten Eingangsanschluss besitzt, um Signale zu empfangen, die Betriebspositionen der Paare von Ein/Aus-Schaltern angeben, zweite Eingangsanschlüsse besitzt, um Signale zu empfangen, die Spannungen an den Anschlüssen der Paare von Ein/Aus-Schaltern angeben, und einen dritten Eingangsanschluss besitzt, um Signale zu empfangen, die den Phasenstrom angeben;
einen Funkfrequenz-Sender, der an den Prozessor angeschlossen ist, um Signale zu senden, die die Betriebspositionen der elektromechanischen Ein/Aus-Schalter der Paare von Ein/Aus-Schaltem, die Spannungen an den Anschlüssen der Paare von Ein/Aus-Schaltern und den Phasenstrom angeben; und
Mittel zur elektrischen Versorgung, die den Prozessor und den Sender versorgen;
und die Steuermittel umfassen:
den Prozessor, der außerdem Ausgänge besitzt, um die Steuersignale auszugeben, um alle Paare von elektromechanischen und elektronischen Ein/Aus-Schaltern zu steuern;
einen Funkfrequenz-Ernpfänger, der an den Prozessor angeschlossen ist, um die Funkfrequenz-Steuersignale zu empfangen, anhand derer die Steuersignale erzeugt werden; und
die Mittel für die elektrische Versorgung, um außerdem den Empfänger und den Verstärker zu versorgen.

15. Umschaltvorrichtung zum Verändern der Impedanz einer Phasenleitung eines Teilstücks einer Leitung für den Transport elektrischer Energie, wobei die Phasenleitung n voneinander elektrisch isolierte und an den Enden des Teilstücks miteinander kurzgeschlossene Leiter umfasst, wobei die Vorrichtung umfasst:
für jeden von höchstens n - 1 der n Leiter einen elektronischen Ein/Aus-Schalter, der den entsprechenden Leiter in Reaktion auf Steuersignale wahlweise öffnen oder schließen kann;
Erfassungsmittel, die die momentanen Betriebsbedingungen der Phasenleitung erfassen; und
Steuermittel, die den elektronischen Ein/Aus-Schalter in Abhängigkeit von den durch die Erfassungsmittel erfassten momentanen Betriebsbedingungen steuern.

16. Vorrichtung nach Anspruch 15, die ein Gehäuse aufweist, das die elektronischen Ein/Aus-Schalter, die Erfassungsmittel und die Steuermittel enthält, und bei der:
n - 1 elektronische Ein/Aus-Schalter für die n - 1 Leiter vorgesehen sind;
die n -1 elektronischen Ein/Aus-Schalter mit den n -1 Leitern jeweils in Reihe geschaltet sind; und
ein Leistungswiderstand zu jedem der n - 1 elektronischen Ein/Aus-Schalter parallelgeschaltet ist, wobei der Leistungswiderstand einen Anschluss besitzt, der an ein Ende des Teilstücks angeschlossen ist, wo die Leiter kurzgeschlossen sind, wobei sich der Leistungswiderstand räumlich innerhalb eines durch die n Leiter begrenzten Volumens und außerhalb des Gehäuses befindet.

17. Vorrichtung nach Anspruch 15, bei der:
die Erfassungsmittel umfassen:
einen Prozessor, der erste Eingangsanschlüsse besitzt, um Signale zu empfangen, die die Spannungen an den Anschlüssen der elektronischen Ein/Aus-Schalter angeben, und einen zweiten Eingangsanschluss besitzt, um Signale zu empfangen, die den Phasenstrom angeben;
einen Funkfrequenz-Sender, der an den Prozessor angeschlossen ist, um Signale auszusenden, die die Spannungen an den Anschlüssen der elektronischen Ein/Aus-Schalter und den Phasenstrom angeben; und
Mittel zur elektrischen Versorgung, um den Prozessor und den Sender zu versorgen;
und die Steuermittel umfassen:
den Prozessor, der außerdem Ausgänge besitzt, um die Steuersignale zum Steuern der elektronischen Ein/Aus-Schalter zu senden;
einen Funkfrequenz-Empfänger, der an den Prozessor angeschlossen ist, um die Funkfrequenz-Steuersignale zu empfangen, anhand derer die Steuersignale erzeugt werden; und
Mittel zur elektrischen Versorgung, um außerdem den Empfänger zu versorgen.

18. Verfahren zum Umschalten, um die Impedanz einer Phasenleitung eines Teilstücks einer Leitung für den Transport elektrischer Energie zu verändern, wobei die Phasenleitung n voneinander elektrisch isolierte und an den beiden Enden des Teilstücks miteinander kurzgeschlossene Leiter umfasst, wobei das Verfahren die folgenden Schritte umfasst:
(a) Erfassen der momentanen Betriebsbedingungen der Phasenleitung; und
(b) Steuern von Paaren elektromechanischer und elektronischer Ein/Aus-Schalter, die zueinander parallelgeschaltet sind, in Abhängigkeit von den im Schritt (a) erfassten momentanen Betriebsbedingungen, um wenigstens eine passive Komponente, die entsprechend mit wenigstens einem der n Leiter in Reihe geschaltet ist, in Reaktion auf die Steuersignale anzuschließen und zu trennen, wobei die Ein/Aus-Schalter jedes Paars unabhängig steuerbar sind.

19. Verfahren zum Umschalten, um die Impedanz einer Phasenleitung eines Teilstücks einer Leitung für den Transport elektrischer Energie zu verändern, wobei die Phasenleitung n voneinander elektrisch isolierte und an den beiden Enden des Teilstücks miteinander kurzgeschlossene Leiter umfasst, wobei das Verfahren die folgenden Schritte umfasst:
(a) Erfassen der momentanen Betriebsbedingungen der Phasenleitung; und
(b) Steuern der elektronischen Ein/Aus-Schalter in Abhängigkeit von den im Schritt (a) erfassten momentanen Betriebsbedingungen, um höchstens n - 1 der n Leiter in Reaktion auf die Steuersignale wahlweise zu öffnen oder zu schließen.

## Claims

1. A switching apparatus for varying the impedance of a phase line of a segment of an electrical power line, the phase line comprising n conductors electrically insulated from each other and short-circuited among each other at two ends of the segment, the apparatus comprising:
for each of at least one of the n conductors, a passive component and a pair of electromechanical and electronic switches connected in parallel to each other are provided, the pair of switches being able to connect and disconnect in a selective manner the passive component in series with the corresponding conductor in response to command signals, the switches of each pair being controllable independently;
detecting means for detecting current operating conditions of the phase line; and
control means for controlling each pair of switches according to the current operating conditions detected by the detecting means.

2. The apparatus according to claim 1, wherein each of the passive components is a capacitor.

3. The apparatus according to claim 2, wherein:
for at most n-1 conductors, n-1 capacitors and n-1 pairs of switches are provided;
the n-1 pairs of switches are respectively connected in series with the n-1 conductors; and
the n-1 capacitors are respectively connected in series with the n-1 pairs of switches.

4. The apparatus according to claim 2, wherein:
n capacitors and n pairs of switches are provided for the n conductors;
the n pairs of switches are respectively connected in series with the n conductors; and
the n capacitors are respectively connected in parallel with the n pairs of switches.

5. The apparatus according to claim 1, comprising a housing for containing the pairs of switches, the detecting means and the control means, and wherein:
n passive components and n pairs of switches are provided for the n conductors;
the n pairs of switches are respectively connected in series with the n conductors;
the n passive components are respectively connected in parallel with the n pairs of switches;
a switch is connected in series with each of the passive components;
the passive components provided for n-1 of the n conductors are capacitors; and
the passive component provided for the nth conductor is a power resistance, the power resistance having a terminal connected to an end of the segment where the conductors are short-circuited, the power resistance being physically located inside of a volume delimited by the n conductors and outside of the housing.

6. The apparatus according to claim 1, wherein:
for at most n-1 of the n conductors, n-1 passive components and n-1 pairs of switches are provided;
the n-1 pairs of switches are respectively connected in series with the n-1 conductors; and
the n-1 passive components are respectively connected in parallel with the n-1 pairs of switches.

7. The apparatus according to claim 6, wherein each of the passive components is a power resistance.

8. The apparatus according to claim 6, wherein each of the passive components is a capacitor.

9. The apparatus according to claim 4, wherein each capacitor is connected in series with a bleeder resistance.

10. The apparatus according to claim 9, further comprising switches connected respectively in series with the capacitors, each of the switches being controllable by the control means.

11. The apparatus according to claim 10, wherein each of the switches comprises a pair of electromechanical and electronic switches connected in parallel and controllable independently by the control means.

12. The apparatus according to claim 10, wherein each of the capacitors is a capacitor variable and controllable by the control means.

13. The apparatus according to claim 5, wherein each of the switches comprises a pair of electromechanical and electronic switches connected in parallel and controllable independently by the control means.

14. The apparatus according to claim 1, wherein:
the detecting means comprise:
a processor having a first input port for receiving signals indicating the operating positions of the pairs of switches, second input ports for receiving signals indicating the voltages at the terminals of the pairs of switches, and a third input port for receiving signals indicating the phase current;
a radiofrequency transmitter connected to the processor for transmitting signals indicating the operating positions of the electromechanical switches of the pairs of switches, the voltages at the terminals of the pairs of switches and the phase current; and
electric power supply means for supplying the processor and the transmitter;
the control means comprise:
the processor which further includes outputs for transmitting the control signals for control all the pairs of electromechanical and electronic switches;
a radiofrequency receiver connected to the processor for receiving radiofrequency control signals from which the control signals are produced; and
the electric power supply means for supplying the receiver and the amplifier.

15. A switching apparatus for varying the impedance of a phase line of a segment of an electrical power line, the phase line comprising n conductors electrically insulated from each other and short-circuited among each other at two ends of the segment, the apparatus comprising:
for each of at most n-1 of the n conductors, an electronic switch able to open or close in a selective manner the corresponding conductor in response to control signals;
detecting means for detecting current operating conditions of the phase line; and
control means for controlling the electronic switch according to the current operating conditions detected by the detecting means.

16. The apparatus according to claim 15, comprising a housing for containing the electronic switches, the detecting means and the control means, and wherein:
n-1 electronic switches are provided for the n-1 conductors;
the n-1 electronic switches are respectively connected in series with the n-1 conductors; and
a power resistance is connected in parallel with each of the n-1 electronic switches, the power resistance having a terminal connected at one end of the segment where the conductors are short-circuited, the power resistance being physically located inside of a volume delimited by the n conductors and outside of the housing.

17. The apparatus according to claim 15, wherein:
the detecting means comprise:
a processor having first input ports for receiving signals indicating the voltages at the terminals of the electronic switches, and a second input port for receiving signals indicating the phase current;
a radiofrequency transmitter connected to the processor for transmitting signals indicating the voltages at the terminals of the electronic switches, and the phase current; and
electronic power supply means for supplying the processor, and the transmitter;
the control means comprise:
the processor which further comprises outputs for transmitting the control signals for controlling the electronic switches;
a radiofrequency receiver connected to the processor for receiving radiofrequency control signals from which the control signals are produced; and
the electric power supply means for further supplying the receiver.

18. A switching method for varying the impedance of a phase line of a segment of an electrical power line, the phase line comprising n conductors electrically insulated from each other and short-circuited among each other at two ends of the segment, the method comprising the following steps:
(a) detecting current operating conditions of the phase line; and
(b) controlling pairs of electromechanical and electronic switches connected in parallel to each other according to the current operating conditions detected in step (a) for connecting and disconnecting in a selective manner at least one passive component connected respectively in series with at least one of the n conductors in response to control signals, the switches of each pair being independently controllable.

19. A switching method for varying the impedance of a phase line of a segment of an electrical power line, the phase line comprising n conductors electrically insulated from each other and short-circuited among each other at two ends of the segment, the method comprising the following steps:
(a) detecting current operating conditions of the phase line; and
(b) controlling electronic switches according to the current operating conditions detected in step (a) for opening or closing in a selective manner at most n-1 of the n conductors in response to control signals.
